Europäisches Patentamt

(19) **European Patent Office**

Office européen des brevets

(11) Veröffentlichungsnummer : **0 248 024**
**B1**

(12) **EUROPÄISCHE PATENTSCHRIFT**

(45) Veröffentlichungstag der Patentschrift :
20.09.89

(21) Anmeldenummer : 86905288.6

(22) Anmeldetag : 13.09.86

(86) Internationale Anmeldenummer :
PCT/EP 86/00528

(87) Internationale Veröffentlichungsnummer :
WO/8703349 (04.06.87 Gazette 87/12)

(51) Int. Cl.⁴ : **F 16 D 55/224**

(54) TEILBELAG-SCHEIBENBREMSE, INSBESONDERE FÜR KRAFTFAHRZEUGE.

(30) Priorität : 30.11.85 DE 3542388

(43) Veröffentlichungstag der Anmeldung :
09.12.87 Patentblatt 87/50

(45) Bekanntmachung des Hinweises auf die Patenterteilung : 20.09.89 Patentblatt 89/38

(84) Benannte Vertragsstaaten :
DE FR GB IT

(56) Entgegenhaltungen :
EP-A- 0 076 202
DE-A- 2 251 111
DE-A- 2 454 279
DE-A- 2 713 379
DE-A- 2 905 833
DE-A- 3 430 351
GB-A- 1 524 007

(73) Patentinhaber : ALFRED TEVES GmbH
Guerickestrasse 7 Postfach 119 155
D-6000 Frankfurt am Main (DE)

(72) Erfinder : THIEL, Rudolf
Am Ebelfeld 179
D-6000 Frankfurt/Main 90 (DE)
Erfinder : KLIMT, Ulrich
Im Matthäuskreuz 10
D-6109 Mühltal 3 (DE)

(74) Vertreter : Grau, Ulf
c/o ALFRED TEVES GMBH Guerickestrasse 7
D-6000 Frankfurt (M) 90 (DE)

EP 0 248 024 B1

Jouve, 18, rue St-Denis, 75001 Paris, France

**Beschreibung**

Die Erfindung betrifft eine Teilbelag-Scheibenbremse, insbesondere für Kraftfahrzeuge gemäß dem Oberbegriff des Patentanspruches 1.

Bei einer bekannten Teilbelag-Scheibenbremse (GB-PS 15 45 825) liegen die Führungsbolzen unmittelbar gleitend an den Wänden der starren Führungsbohrungen an und bilden auf diese Weise eine starre Säulenführung für den Bremsrahmen, durch die der Bremsrahmen ausschließlich mit dem Bremsträger verbunden ist. Diese bekannte Ausgestaltung einer Teilbelag-Scheibenbremse hat den Nachteil, daß die Abstände der Führungsbolzen und Führungsbohrungen bei der Herstellung sehr genau eingehalten werden müssen, um ein Klemmen der Führungen zu vermeiden. Weiterhin wurde bei der bekannten Teilbelag-Scheibenbremse das Auftreten von Schrägverschleiß, ein hohes Restbremsmoment nach dem Lösen der Bremse und das Auftreten von Bremsrubbeln als nachteilig festgestellt.

Es ist weiterhin bekannt (DE-AS 28 04 808), bei einer Teilbelag-Scheibenbremse zur Führung eines die Bremsscheibe und die Bremsbacken radial von außen umgreifenden Bremssattels an zwei am Bremsträger befestigten, achsparallelen Führungsbolzen in den Führungsbohrungen im Bremssattel elastische Führungshülsen vorzusehen, und den Bremssattel auf der den Führungsbolzen abgekehrten Seite der Bremsscheibe am Außenrand der Trägerplatte der Bremsbacke zu lagern, wobei der Bremssattel und die Bremsbacke durch eine Federspange gegeneinander und gegen den Bremsträger gedrückt werden. Bei dieser bekannten Teilbelag-Scheibenbremse sind die Bremsbacken in Umfangsrichtung der Bremsscheibe verhältnismäßig lang und daher empfindlich gegen Schrägverschleiß. Weiterhin ist von Nachteil, daß zum Auswechseln der Bremsbacken der Bremssattel zum Bremsträger gelöst werden muß.

Aus der GB-A-1,524,007 ist eine Scheibenbremse mit einem zylindrischen Halter bekannt, dessen geschlossenes Ende in einem Bremsträger verschraubt ist und dessen offenes Ende dem Gehäuse gegenüberliegt. Eine elastische Buchse ist so in der Bohrung des Halters gesichert, daß ein Führungsbolzen in der Buchse gleiten kann. Der gleitende Teil des Führungsbolzens ist durch eine Manschette gegen die Außenwelt abgeschirmt. Bei dieser bekannten Teilbelag-Scheibenbremse ist der außenliegende Schenkel nicht abgestützt und daher unzureichend geführt. Weiterhin hat sich als nachteilig erwiesen, daß zum Auswechseln der Bremsbeläge das Gehäuse vom Bremsträger entfernt werden muß.

Eine gattungsgemäße Scheibenbremse ist aus der DE-OS 24 54 279 bekannt. Die Scheibenbremse weist einen Bremsträger auf, der die Bremsscheibe L-förmig übergreift. An dem Bremsträger ist in axialer Richtung verschiebbar ein Bremsrahmen gelagert. Der Bremsrahmen weist auf der einen Seite der Bremsscheibe eine Betätigungseinrichtung auf, die eine erste Bremsbacke direkt und eine zweite Bremsbacke indirekt betätigt. Nachteilig sind für das Zusammenwirken von Führungsbolzen mit der Betätigungseinrichtung an Queransätzen der Betätigungseinrichtung ebene Führungsflächen vorgesehen, so daß nur eine ungenügende Führung zwischen Bremsträger und Betätigungseinrichtung erfolgt. Auf der der Betätigungseinrichtung gegenüberliegenden Seite der Bremsscheibe ist der Rahmen nachteilig an der bei Betätigung rubbelnden Bremsbacke abgestützt, so daß sich das Rubbeln auf den Rahmen überträgt.

Der Erfindung liegt die Aufgabe zugrunde, eine einfach aufgebaute Teilbelag-Scheibenbremse der im Oberbegriff des Patentanspruches 1 angegebenen Art zu schaffen, bei der genaue Fertigungstoleranzen für die Führungsanordnung nicht erforderlich sind.

Diese Aufgabe wird erfindungsgemäß durch die den Patentanspruch 1 kennzeichnenden Merkmale gelöst.

Mit der erfindungsgemäßen Lösung wird eine Teilbelag-Scheibenbremse geschaffen, die ohne eine aufwendige Festlager-Führung auskommt. Vielmehr ist ein Führungssystem verwendet, welches eine vollgekapselte, korrosionsfreie, gummielastische und symmetrische Anordnung ermöglicht. Als Führungsbolzen kann ein glatter Rundstahl verwendet werden. Dem Stand der Technik anhaftende Nachteile, wie Schrägverschleiß, hohes Restbremsmoment nach dem Lösen der Bremse und Bremsrubbeln werden durch die erfindungsgemäße Lösung beseitigt. Die erfindungsgemäße Lösung gewährleistet bei einfachem Aufbau und in Verbindung mit der elastischen Bolzenführung eine Nachgiebigkeit des Bremsrahmens in radialer und tangentialer Richtung. Insbesondere bei Korrosionsaufbau kann der Bremsrahmen ausweichen und sich dadurch wieder von Korrosion befreien. Bei der Herstellung können weitgehend einfache Normteile verwendet werden. Der Belagwechsel kann am Fahrzeug durch einfache radiale Entnahme der Beläge vorgenommen werden.

Gemäß einer vorteilhaften Ausführungsform der Erfindung ist zur Abstützung des Bremsrahmens auf der den Führungsbolzen abgekehrten Seite der Bremsscheibe am zweckmäßigerweise einstückig mit dem übrigen Teil des Bremsträgers ausgebildeten Verbindungsabschnitt ein einziger Abstützpunkt vorgesehen, der im Bereich der die Achse der Bremsscheibe und die Symmetrieachse des Bremsträgers enthaltenden Ebene angeordnet ist und insbesondere innerhalb dieser Ebene liegt. Zweckmäßig erscheint es dabei insbesondere, wenn der Bremsrahmen mit seiner radial außen liegenden Fläche an der radial innen liegenden Fläche des Bremsträgers abgestützt ist, was bedeutet, daß die Federeinrichtung auf der gegenüberliegenden Seite auf den Bremsrahmen eine radial nach innen wirkende Kraft ausüben muß. Bei dieser Anordnung ergibt sich ein besonders einfacher, nur wenig Bearbeitung erfordernder Aufbau, wobei neben den beiden Führungsbolzen als dritter Abstützpunkt ein offener Anschlag zwischen Bremsrahmen und Bremsträger gebildet wird. Die Anschlagstelle an dem Bremsrahmen braucht nicht bearbeitet werden, die Anschlagstelle am Bremsträger wird zweckmäßig aus Gründen des Toleranzausgleichs zusammen mit den an den Bremsträgerarmen vorgesehenen Belagabstützflächen bearbeitet.

Weitere vorteilhafte Ausführungsformen der Erfindung sehen vor, daß die Federeinrichtung auf der Befestigungsseite des Bremsträgers angeordnet ist, wobei die Federeinrichtung insbesondere durch eine einzige Drahtfeder gebildet sein kann, die zweckmäßig einen U-förmigen zentralen Abschnitt zur Abstützung am Bremsrahmen und zwei vom zentralen Abschnitt ausgehende und sich zunächst im wesentlichen parallel zur Bremsscheibe und anschließend im wesentlichen parallel zur Bremsscheiben-Drehachse erstreckende Arme aufweist, deren Endteile am Bremsträger befestigbar sind. Mit einer solchen einfachen Drahtfeder können beide Teile auf einfache und kostengünstige Weise miteinander verspannt werden.

Eine weitere bevorzugte Ausführungsform sieht vor, daß der Bremsträger auf der Befestigungsseite einen Verbindungsabschnitt aufweist, der zwei im wesentlichen radial verlaufende Bremsträgerabschnitte verbindet und mit diesen eine Öffnung begrenzt, in die sich der die Befestigungseinrichtung aufweisende Schenkel des Bremsrahmens teilweise erstreckt. Die Federeinrichtung wird mit Vorteil an diesem Befestigungsabschnitt angebracht.

Durch eine zweiteilige Ausführung des Bremsrahmens, wie sie eine weitere vorteilhafte Ausführungsform der Erfindung vorsieht, kann ein geschweißter, geschraubter oder verstemmter, die Bohrung der Betätigungseinrichtung verschließender Deckel entfallen, so daß weitere teuere Arbeitsgänge vermieden werden.

Ein Ausführungsbeispiel der Erfindung ist in der Zeichnung dargestellt und im folgenden beschrieben.

Es zeigen :

Fig. 1 eine Draufsicht auf eine Teilbelag-Scheibenbremse ;

Fig. 2 eine Ansicht der Teilbelag-Scheibenbremse gemäß Fig. 1 von der Innenseite her ;

Fig. 3 eine Ansicht der in Fig. 1 dargestellten Teilbelag-Scheibenbremse von der Außenseite ; und

Fig. 4 die in den Fig. 1-3 dargestellte Teilbelag-Scheibenbremse im Schnitt entlang der Linie A-A in Fig. 1.

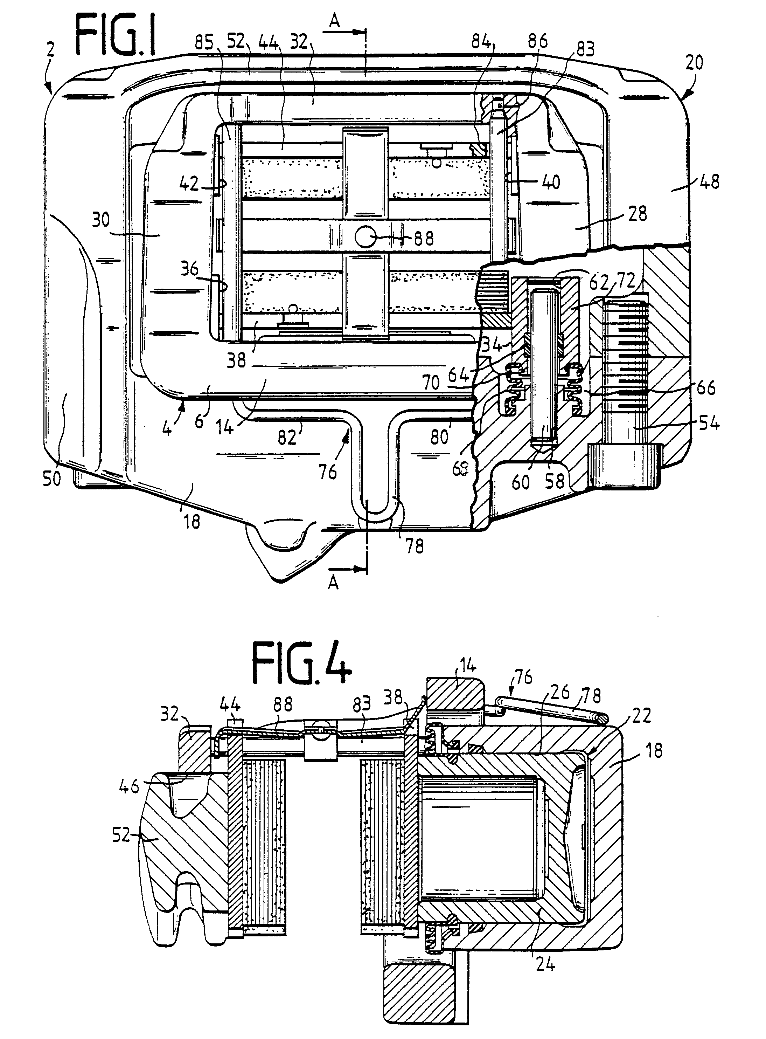

Die in der Zeichnung dargestellte Teilbelag-Scheibenbremse 2 weist einen Bremsträger 4 zur Befestigung an einem fahrzeugfesten Teil, wie beispielsweise dem Achsschenkel, auf. Der Bremsträger 4 besteht aus einem sich im wesentlichen parallel zu einer (nicht dargestellten) Bremsscheibe erstreckenden Befestigungsabschnitt 6, der zwei im wesentlichen radial verlaufende Schenkel 8,10 aufweist, die über einen unteren, radial innen liegenden Verbindungsabschnitt 12 und einen radial außen liegenden oberen Verbindungsabschnitt 14 miteinander verbunden sind. Die Schenkel 8,10 und die Verbindungsabschnitte 12,14 bilden eine Öffnung 16, in die sich ein Teil des eine Betätigungseinrichtung aufnehmenden Schenkels 18 des Bremsrahmens 20 erstreckt. Von der Betätigungseinrichtung 22 ist hier der Bremskolben 24 zu sehen, der mit seinem Ende aus einer Bremszylinderbohrung 26 herausragt und sich dabei, wie auch ein Teil des die Betätigungseinrichtung bildenden Schenkels 18 durch die Öffnung 16 erstreckt. Vom radial außen liegenden Teil des oberen Verbindungsabschnittes 14 des Bremsträgers 4 erstrecken sich im wesentlichen parallel zur Bremsscheibenachse verlaufende Bremsträgerarme 28, 30, deren außen liegende Enden mittels eines Verbindungsabschnittes 32 verbunden sind. Wie aus Fig. 4 ersichtlich, ist der obere Verbindungsabschnitt 14 gegenüber dem unteren Verbindungsabschnitt 12 auf der Befestigungsseite axial etwas nach innen versetzt, so daß im dadurch freien Bereich innere Abstützflächen 34, 36 (Fig. 1) für den inneren Bremsbelag 38 ausgebildet werden können. Entsprechende Abstützflächen 40, 42 sind an den Bremsträgerarmen 28, 30 in deren außen liegenden Bereich für den äußeren Bremsbelag 44 vorgesehen.

Wie aus Fig. 4 ersichtlich ist, ist der äußere Verbindungsabschnitt 32, der mit dem Rest des Halters einstückig ausgebildet ist, gegenüber dem inneren oberen Verbindungsabschnitt 14 radial etwas nach innen versetzt und liegt etwa auf der Höhe der oberen Begrenzung des Bremskolbens 24. Der Verbindungsabschnitt 32 weist auf seiner radial innen liegenden Seite einen Abstützpunkt bzw. eine Abstützfläche 46 auf, die im Bereich der Symmetrieachse des Bremsträgers liegt, die mit der in Fig. 1 dargestellten Schnittebene A-A zusammenfällt. Der Bremsrahmen 20 weist einen inneren Schenkel 18 sowie zwei sich im wesentlich parallel zur Bremsscheibenachse bzw. zu den Bremsträgerarmen 28, 30 erstreckende Arme 48, 50 auf, die auf der axial außen liegenden Seite mittels eines Verbindungsabschnittes 52 verbunden sind. Da im Verbindungsabschnitt 52 keine Ausnehmung für das Bearbeiten der Bremszylinderbohrung 26 vorgesehen zu sein braucht, ist der Rahmen sehr starr, wodurch sich eine geringe Volumenaufnahme ergibt. Der Bremsrahmen 20 ist aus zwei Teilen zusammengesetzt, die mit zwei Verbindungsschrauben 54, 55 miteinander verschraubt sind. Die Schnittebene liegt dabei etwa am Übergang vom Schenkel 18 zu den Armen 48, 50. Der Schenkel 18 weist zwei symmetrisch zur Achse A-A angeordnete Bohrungen 58 (nur eine zu sehen) auf, in die glatte Stahl-Führungsbolzen 60 eingepreßt sind. Die Führungsbolzen 60 erstrecken sich parallel zur Bremsscheibenachse und greifen in Bohrungen 62 ein, die in den Schenkeln 8,10 des Bremsträgers 4 bzw. daran ausgebildeten Bremsträgeraugen 72 vorgesehen sind. Die Bremsträgeraugen 72 erstrecken sich hierbei axial nur im Bereich des inneren Bremsbelages 36. Zwischen den Führungsbolzen 60 und den Bohrungen 62 ist genügend Spiel gelassen, so daß in die Bohrungen 62 eingesetzte elastische Hülsen 64, eine nachgiebige Führung für die Führungsbolzen bilden. Im Befestigungsbereich für die Führungsbolzen 60 sind am Bremsrahmen 20 gegossene Ausnehmungen 66 vorgesehen, in denen an bearbeiteten Sitzflächen das eine Ende einer elastischen Schutzkappe 68 angebracht ist. Das andere Ende der Schutzkappe 68 ist an einem axialen Vorsprung 70 des die Bohrung 62 enthaltenden Bremsträgerauges 72 befestigt. Die Schutzkappe 68 schutzt dadurch die Führungsanordnung vor Schmutz und Beschädigungen. Der axiale Vorsprung kann, wie gezeichnet, durch eine eingepreßte Hülse mit integriertem Schutzkappensitz gebildet werden. Dadurch ergibt sich eine bessere Bearbeitung der Stufe fur die elastische Hülse (Metaloplast).

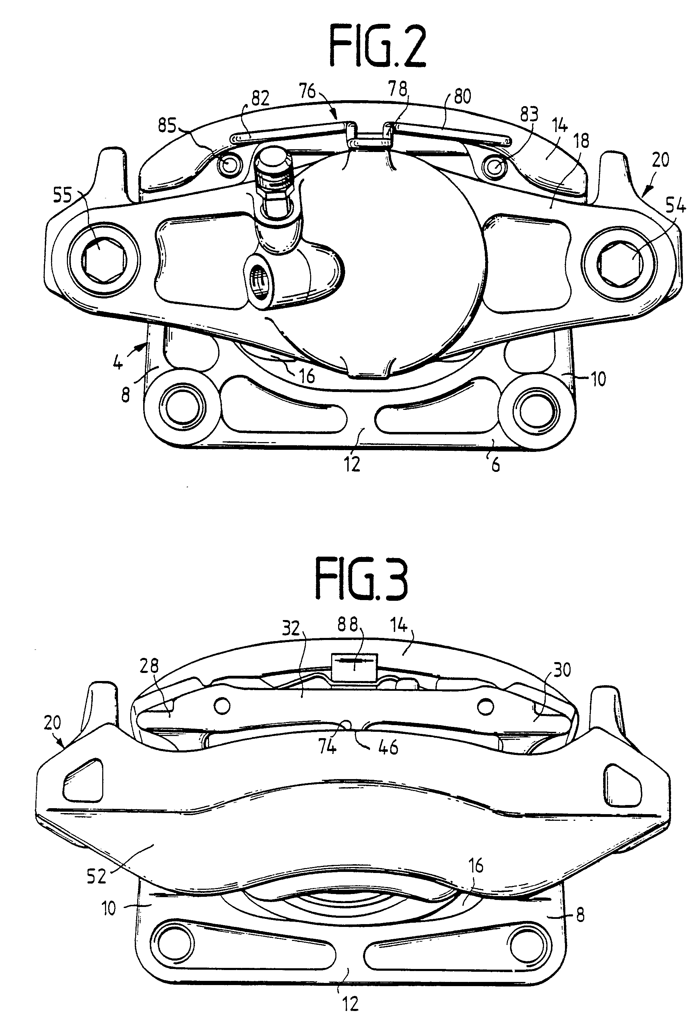

Wie aus den Fig 3 und 4 ersichtlich ist, weist der Verbindungsabschnitt 52 des Bremsrahmens 20 eine den Abstützpunkt bzw. der Abstützfläche 46 zugeordnete Abstützfläche 74 auf, die im Bereich der Mittellinie A-A angeordnet ist und damit im oberen Bereich des geschwungen ausgebildeten Verbindungsabschnittes 52 liegt. Um den Bremsrahmen 20 gegen den Bremsträger 4 zu verspannen, ist eine federnde Einrichtung 76 vorgesehen, die hier als Drahtfeder ausgebildet ist. Die Drahtfeder 76 weist einen zentralen, U-förmigen Abschnitt 78 auf, der auf der radial außen liegenden oberen Seite des Verbindungsabschnittes 18 des Bremsrahmens 20 aufliegt und unter einem kleinen Winkel zur Auflagenfläche verläuft. Ausgehend von dem zentralen Abschnitt 78 erstrecken sich im wesentlichen parallel zur Bremsscheibe und unter einem kleinen Winkel radial nach innen hin verlaufende Arme 80, 82, deren Endteile parallel zur Bremsscheibenachse umgebogen sind und in im Bremsträgerabschnitt 14 vorgesehene Bohrungen eingreifen. Durch die Wirkung der Feder 76 wird der Bremsrahmen 20 auf der Innenseite der durch die Verbindungslinie der elastischen Hülsen 64 gebildeten Achse nach unten und auf der Außenseite nach oben bzw. radial außen gedrückt, so daß die Abstützfläche 74 des Verbindungsabschnittes 52 gegen die Abstützfläche 46 des Bremsträgers 4 gedrückt wird.

Die Bremsbeläge 38, 44 sind über Belaghaltestifte 83, 85 im Bremsträger 4 gehalten. Die Belaghaltestifte 83, 85 erstrecken sich parallel zur Bremsscheibenachse und sind durch längliche Öffnungen in den Rückenplatten der Bremsbeläge 38, 44 geführt. Eine derartige Öffnung 84 ist in Fig. 1 dargestellt. Zur Befestigung der Belaghaltestifte 83, 85 dienen Bohrungen in den Verbindungsabschnitten 14, 32 des Bremsträgers. Eine derartige Bohrung 86 ist gleichfalls aus Fig. 1 ersichtlich. Eine Kreuzfeder 88 ist vorgesehen, um die Bremsbeläge 38, 44 gegen die Belaghaltestifte 83, 85 zu verspannen. Die Kreuzfeder 88 liegt hierzu mit ihren entsprechenden Schenkeln auf den Rückenplatten der Bremsbeläge auf, während quer dazu verlaufende Schenkel unter die Belaghaltestifte 83, 85 greifen.

Bezugszeichenliste

2 Teilbelag-Scheibenbremse
4 Bremsträger
6 Befestigungsabschnitt
8 Schenkel
10 Schenkel
12 Verbindungsabschnitt
14 Verbindungsabschnitt
16 Öffnung
18 Schenkel
20 Bremsrahmen
22 Betätigungseinrichtung
24 Bremskolben
26 Bremszylinderbohrung
28 Bremsträgerarm
30 Bremsträgerarm
32 Verbindungsabschnitt
34 Abstützfläche
36 Abstützfläche
38 innerer Bremsbelag
40 Arbeitsfläche
42 Arbeitsfläche
44 äußerer Bremsbelag
46 Abstützpunkt
48 Arm
50 Arm
52 Verbindungsabschnitt
54 Verbindungsschraube
55 Verbindungsschraube
56-
58 Bohrung
60 Führungsbolzen
62 Bohrung
64 elastische Hülse
66 Einstich
68 Schutzkappe
70 Vorsprung
72 Auge
74 Arbeitsfläche
76 federnde Einrichtung
78 Abschnitt
80 Arm
82 Arm
83 Belaghaltestift
84 Öffnung
85 Belaghaltestift
86 Bohrung
88 Kreuzfeder

## Patentansprüche

1. Teilbelag-Scheibenbremse (2), insbesondere für Kraftfahrzeuge, mit einem seitlich neben einer Bremsscheibe befestigbaren Bremsträger (4), der zwei den Rand der Bremsscheibe übergreifende Arme (28, 30) aufweist, die Abstützflächen (34, 36, 40, 42) und Führungen für beiderseits der Bremsscheibe angeordnete Bremsbacken (38, 44) bilden, an denen die Bremsbacken (38, 44) parallel zur Drehachse der Bremsscheibe verschiebbar gelagert sind, und mit einem die Bremsscheibe und die Bremsbacken (38, 44) umgreifenden, die Betätigungskraft einer Bremsbetätigungsvorrichtung (22) auf eine Bremsbacke (44) übertragenden Bremsrahmen (20), der in Richtung der Drehachse der Bremsscheibe verschiebbar an achsparallelen Führungsbolzen (80) geführt ist, die am Bremsträger (4) oder am Bremsrahmen (20) befestigt sind und in Führungsbohrungen (58, 62) in einem seitlich neben der Bremsscheibe verlaufenden Schenkel (8, 10, 18) des Bremsrahmens (20) oder des Bremsträgers (4) eingreifen, wobei der Bremsrahmen (20) auf der den Führungsbolzen (60) abgekehrten Seite der Bremsscheibe abgestützt ist, dadurch gekennzeichnet, daß die Abstützung des Bremsrahmens (20) an einem die beiden Bremsträgerarme (28, 30) verbindenden Verbindungsabschnitt (32) erfolgt, daß in den Führungsbohrungen (62) elastische Führungshülsen (64) angeordnet sind, über die der Bremsrahmen (20) elastisch nachgiebig an den Führungsbolzen (60) abgestützt ist, und daß eine Federeinrichtung (76) vorgesehen ist, die den Bremsrahmen (20) gegen den Bremsträger (4) verspannt.

2. Teilbelag-Scheibenbremse nach Anspruch 1, dadurch gekennzeichnet, daß sur Abstützung des Bremsrahmens (20) auf der den Führungsbolzen (60) abgekehrten Seite der Bremsscheibe ein einziger Abstützpunkt bzw. Abstützfläche (48, 74) vorgesehen ist, der im Bereich der die Drehachse der Bremsscheibe und die Symmetrieachse des Bremsträgers (4) enthaltenen Ebene angeordnet ist und insbesondere innerhalb dieser Ebene liegt.

3. Teilbelag-Scheibenbremse nach Anspruch 1 oder 2, dadurch gekennzeichnet, daß der Bremsrahmen (20) mit seiner radial außen liegenden Fläche (74) an der radial innen liegenden Fläche (48) des Bremsträgers (4) abgestützt ist.

4. Teilbelag-Scheibenbremse nach einem der vorhergehenden Ansprüche, dadurch gekennzeichnet, daß der Bremsträger (4) auf der Befestigungsseite einen Verbindungsabschnitt (14) aufweist, der zwei im wesentlichen radial verlaufende Schenkel (8,10) miteinander verbindet und mit diesen eine Öffnung (16) begrenzt, in die sich der die Betätigungseinrichtung (22) aufweisende Schenkel (18) des Bremsrahmens (20) teilweise erstreckt.

5. Teilbelag-Scheibenbremse nach einem der vorhergehenden Ansprüche, dadurch gekennzeichnet, daß die Federeinrichtung (76) auf der Befestigungsseite des Bremsträgers (4) angeordnet ist.

6. Teilbelag-Scheibenbremse nach Anspruch 4 dadurch gekennzeichnet, daß die Federeinrichtung (76) eine einzige Drahtfeder (76) ist.

7. Teilbelag-Scheibenbremse nach Anspruch 6, dadurch gekennzeichnet, daß die Drahtfeder (76) einen U-förmigen zentralen Abschnitt (78) zur Abstützung am Bremsrahmen (20) und zwei vom zentralen Abschnitt (78) ausgehende, sich zunächst im wesentlichen parallel zur Bremsscheibe und anschließend im wesentlichen parallel zur Bremsscheiben-Drehachse erstreckende Arme (80, 82) aufweist, deren Endteile am Bremsträger (4) befestigbar sind.

8. Teilbelag-Scheibenbremse nach Anspruch 4 und einem der Ansprüche 5 bis 7, dadurch gekennzeichnet, daß die Federeinrichtung (76) am Verbindungsabschnitt (14) des Bremsträgers (4) befestigt ist.

9. Teilbelag-Scheibenbremse nach einem der vorhergehenden Ansprüche, dadurch gekennzeichnet, daß der Bremsrahmen (20) aus zwei miteinander verschraubten Teilen besteht.

**Claims**

1. A spot-type disc brake (2), in particular for automotive vehicles, with a brake carrier (4) mountable laterally beside a brake disc, the said brake carrier having two arms (28, 30) straddling the edge of the brake disc and forming supporting surfaces (34, 36, 40, 42) and guides for brake shoes (38, 44) arranged on both sides of the brake disc, whereat the brake shoes (38, 44) are displaceably supported parallel to the axis of rotation of the brake disc, and with a brake frame (20) straddling the brake disc and the brake shoes (38, 44) and transmitting the actuating force of a brake actuation device (22) onto one brake shoe (44) and being guided displaceably in the direction of the axis of rotation of the brake disc on axially parallel guide bolts (60) fastened at the brake carrier (4) or at the brake frame (20) and engaging guide bores (58, 62) provided in a limb (8, 10, 18) of the brake frame (20) or of the brake carrier (4), which limb extends laterally beside the brake disc, the said brake frame (20) being supported on the side of the brake disc averted from the guide bolts (60), characterised in that the brake frame (20) is supported at a connecting portion (32) interconnecting the two brake carrier arms (28, 30), in that elastic guide sleeves (64) are arranged in the guide bores (62) and serve to provide elastic yielding support for the brake frame (20) on the guide bolts (60), and in that a spring device (76) is provided which clamps the brake frame (20) relative to the brake carrier (4).

2. A spot-type disc brake as claimed in claim 1, characterized in that for the purpose of supporting the brake frame (20) on the brake disc's side averted from the guide bolts (60) one sole point of support or rather supporting surface (46, 74) is provided, the said point of support lying in the area of the plane which contains the axis of rotation of the brake disc and the axis of symmetry of the brake carrier (4), and in particular lying within this plane.

3. A spot-type disc brake as claimed in claim 1 or 2, characterized in that the brake frame (20) is supported with its radially outside surface (74) on the radially inside surface (46) of the brake carrier (4).

4. A spot-type disc brake as claimed in any one of the preceding claims, characterized in that, on the mounting side, the brake carrier (4) has a connecting portion (14) connecting two essentially radially extending limbs (8, 10) with each other and, with the same, confining an opening (16) into which the brake frame's (20) limb (18) which contains the actuation device (22) is partially extending.

5. A spot-type disc brake as claimed in any one of the preceding claims, characterized in that the spring device (76) is arranged on the mounting side of the brake carrier (4).

6. A spot-type disc brake as claimed in claim 5, characterized in that the spring device (76) is one sole wire spring (76).

7. A spot-type disc brake as claimed in claim 6, characterized in that the wire spring (76) has a U-shaped central portion (78) for the support on the brake frame (20) and two arms (80, 82) proceeding from the central portion (78) and at first essentially extending parallel to the brake disc and, subsequently, essentially extending in parallel to the brake disc's axis of rotation, the end portions of said arms being attachable to the brake carrier (4).

8. A spot-type disc brake as claimed in claim 4 and in any one of the claims 5 to 7, characterized in that the spring device (76) is fastened at the connecting portion (14) of the brake carrier (4).

9. A spot-type disc brake as claimed in any one of the preceding claims, characterized in that the brake frame (20) consists of two parts screwed together.

**Revendications**

1. Frein à disque à garnitures partielles (2), en particulier pour véhicule à moteur, comprenant un support de frein (4) pouvant être fixé latéralement près d'un disque de frein, qui présente deux bras (28, 30) dépassant le bord du disque de frein, qui forment des faces d'appui (34, 36, 40, 42) et des guidages pour des mâchoires de frein (38, 44) agencées des deux côtés du disque de frein, sur lesquelles les mâchoires de frein (38, 44) sont montées coulissantes parallèlement à l'axe de rotation du disque de frein, et comprenant un cadre de frein (20) entourant le disque de frein et les mâchoires de frein (38, 44), transmettant la force d'actionnement d'un dispositif d'actionnement du frein (22) à une mâchoire de frein (44), qui est guidé coulissant dans le sens de l'axe de rotation du disque de frein sur des broches de guidage (60) parallèles à l'axe, qui sont fixés au support de frein (4) ou au cadre de frein (20) et qui s'engagent dans des perçages de guidage (58, 62) à l'intérieur d'une branche (8, 10, 18) du cadre de frein (20) ou du support de frein (4) disposée latéralement près du disque de frein, le cadre de frein (20) s'appuyant sur la face du disque de frein éloignée des broches de guidage (60), caractérisé en ce que l'appui du cadre de frein (20) s'effectue sur une section de liaison (32) reliant les deux bras du support de frein (28, 30), en ce que des douilles élastiques de guidage (64) sont agencées à l'intérieur des perçages de guidage (62), au moyen desquelles le cadre de frein (20) s'appuie de manière souple élastique sur les broches de guidage (60), et en ce qu'il est prévu un dispositif de ressort (76) qui serre le cadre de frein (20) contre le support de frein (4).

2. Frein à disque à garnitures partielles selon la revendication 1, caractérisé en ce qu'il est prévu, pour l'appui du cadre de frein (20) sur la face du disque de frein éloignée des broches de guidage (60), un seul point d'appui ou une seule surface d'appui (46, 74), qui se trouve dans la zone du plan contenant l'axe de rotation du disque de frein et l'axe de symétrie du support de frein (4) et se situe en particulier à l'intérieur de ce plan.

3. Frein à disque 2 garnitures partielles selon l'une quelconque des revendications 1 ou 2, caractérisé en ce que le cadre de frein (20) s'appuie, par sa face (74) située à l'extérieur dans le sens radial, sur la face (46) située à l'intérieur dans le sens radial du support de frein (4).

4. Frein à disque à garnitures partielles selon l'une quelconque des revendications précédentes, caractérisé en ce que le support de frein (4) présente sur la face de fixation une section de liaison (14) qui relie entre elles deux branches (8, 10) disposées en substance dans le sens radial et délimite avec celles-ci une ouverture (16) à l'intérieur de laquelle la branche (18) du cadre de frein (20) présentant le dispositif d'actionnement (22) est agencée partiellement.

5. Frein à disque à garnitures partielles selon l'une quelconque des revendications précédentes, caractérisé en ce que le dispositif de ressort (76) est agencé sur la face de fixation du support de frein (4).

6. Frein à disque à garnitures partielles selon la revendication 5, caractérisé en ce que le dispositif de ressort (76) est un seul ressort en fil (76).

7. Frein à disque à garnitures partielles selon la revendication 6, caractérisé en ce que le ressort en fil (76) présente une section centrale en forme de U (78) pour l'appui sur le cadre de frein (20) et deux bras (80, 82) partant de la section centrale (78), disposés tout d'abord en substance parallèlement au disque de frein puis en substance parallèlement à l'axe de rotation du disque de frein, dont les parties d'extrémité peuvent se fixer sur le support de frein (4).

8. Frein à disque à garnitures partielles selon la revendication 4 et selon l'une quelconque des revendications 5 à 7, caractérisé en ce que le dispositif de ressort (76) est fixé sur la section de liaison (14) du support de frein (4).

9. Frein à disque à garnitures partielles selon l'une quelconque des revendications précédentes, caractérisé en ce que le cadre de frein (20) est constitué de deux parties vissées l'une à l'autre.

# FIG.1

# FIG.4

# FIG.2

# FIG.3